# EUROPEAN PATENT SPECIFICATION

(11) **EP 3 663 558 B1**
(45) Date of publication and mention of the grant of the patent: **13.10.2021**
(21) Application number: 18840321.6
(22) Date of filing: 02.08.2018
(51) Int. Cl.: F02B 61/06, B60K 17/06, F02B 61/02, F02B 77/00, F16F 15/26

(54) **ENGINE AND VEHICLE**
MOTOR UND FAHRZEUG
MOTEUR ET VÉHICULE

(30) Priority: 03.08.2017 JP 2017150854
(43) Date of publication of application: 10.06.2020
(73) Proprietor: Yamaha Hatsudoki Kabushiki Kaisha, Iwata-shi, Shizuoka 438-8501 (JP)
(72) Inventor: WAKUDA, Masahiro, Iwata-shi Shizuoka 438-8501 (JP)
(74) Representative: Grünecker Patent- und Rechtsanwälte PartG mbB
(86) International application number: PCT/JP2018/028979
(87) International publication number: WO 2019/026987

(56) References cited:
- JP-A- 2009 221 956
- JP-A- 2010 228 736
- JP-A- 2014 227 970
- JP-A- 2014 227 970
- US-B1- 6 257 192

## Description

The present invention relates to an engine that rotates a main shaft and a balance shaft in conjunction with a crankshaft rotating in response to a piston reciprocating in a cylinder.

Prior art document JP 2010 22873 A discloses an engine according the invention comprises: a cylinder; a crankcase connected to the cylinder; a crankshaft arranged in the crankcase at least partially, connected via a connecting rod to a piston to make reciprocating motion in the cylinder, and supported by the crankcase so as to be rotatable about a crank axis in conjunction with the reciprocating motion of the piston; a main shaft arranged in the crankcase at least partially, forming a part of a transmission, and supported by the crankcase so as to be rotatable about a main axis in conjunction with the crankshaft; and a balance shaft arranged in the crankcase at least partially, provided on the opposite side of the main shaft across a virtual half line starting from the crank axis and extending parallel to the axis of the cylinder toward the cylinder as viewed from the axis direction of the crankshaft, and supported by the crankcase so as to be rotatable about a balancer axis in conjunction with the crankshaft, wherein as viewed from the axis direction of the crankshaft, an angle θ1 and an angle θ2 fulfill a relationship of θ1 < θ2, the angle θ1 being provided between the virtual half line and a first virtual line segment between the crank axis and the main axis, the angle θ2 is provided between the virtual half line and a second virtual line segment between the crank axis and the balancer axis. As viewed from the axis direction of the crankshaft, an angle θ3 provided between the virtual half line and a third virtual line segment between the crank axis and the drive axis is less than 90° and the angle θ2 and the angle θ3 fulfill a relationship of θ2 > θ3.

Regarding an engine in which the reciprocating motion of a piston in a cylinder is converted to rotary motion using a crankshaft to rotate a main shaft, the reciprocating motion of the piston causes vibration. According to patent literature 1, this vibration is reduced by providing a balance shaft on the opposite side of the main shaft across the crankshaft, and rotating the balance shaft in conjunction with the crankshaft.

### [CITATION LIST]

### [PATENT LITERATURE]

[PTL 1] JP5323833
[PTL 2] JP 2010228736 A

As described above, in the engine in which the main shaft and the balance shaft are arranged across the crankshaft, the respective masses of the main shaft and the balance shaft are distributed to the opposite sides of the crankshaft. Hence, the arrangement of the main shaft influences mass centralization. However, this issue is not considered sufficiently in patent literature 1 and has room for improvement.

It is the object of the present invention to provide an engine capable of encouraging mass centralization in an engine equipped with a main shaft, a crankshaft, and a balance shaft.

According to the present invention said object is solved by an engine having the features of independent claim 1. Preferred embodiments are laid down in the dependent claims.

An engine according the invention comprises: a cylinder; a crankcase connected to the cylinder; a crankshaft arranged in the crankcase at least partially, connected via a connecting rod to a piston to make reciprocating motion in the cylinder, and supported by the crankcase so as to be rotatable about a crank axis in conjunction with the reciprocating motion of the piston; a main shaft arranged in the crankcase at least partially, forming a part of a transmission, and supported by the crankcase so as to be rotatable about a main axis in conjunction with the crankshaft; and a balance shaft arranged in the crankcase at least partially, provided on the opposite side of the main shaft across a virtual half line starting from the crank axis and extending parallel to the axis of the cylinder toward the cylinder as viewed from the axis direction of the crankshaft, and supported by the crankcase so as to be rotatable about a balancer axis in conjunction with the crankshaft, wherein as viewed from the axis direction of the crankshaft, an angle θ1 and an angle θ2 fulfill a relationship of θ1 < θ2, the angle θ1 being provided between the virtual half line and a first virtual line segment between the crank axis and the main axis, the angle θ2 is provided between the virtual half line and a second virtual line segment between the crank axis and the balancer axis.

In the present invention (engine) having the foregoing configuration, the respective masses of the main shaft and the balance shaft are distributed to the opposite sides of the virtual half line starting from the crank axis and extending parallel to the axis of the cylinder toward the cylinder. Hence, the arrangement of the main shaft influences mass centralization, as described above. In this regard, in the present invention, the main shaft is arranged so as to fulfill the relationship of θ1 < θ2, the angle θ1 being provided between the virtual half line and a first virtual line segment between the crank axis and the main axis, the angle θ2 being provided between the virtual half line and a second virtual line segment between the crank axis and the balancer axis. More specifically, to encourage mass centralization, the main shaft is arranged close to the virtual half line starting from the crank axis so as to fulfill this angular relationship. By doing so, mass centralization can be encouraged in the engine provided with the main shaft, the crankshaft, and the balance shaft.

The engine is further configured so that the angle θ1 is less than 90°. This brings the main shaft close to the virtual half line, making it possible to encourage further mass centralization.

The engine further comprises a drive shaft forming a part of the transmission, and supported by the crankcase so as to be rotatable about a drive axis in conjunction with the main shaft, wherein as viewed from the axis direction of the crankshaft, an angle θ3 provided between the virtual half line and a third virtual line segment between the crank axis and the drive axis is less than 90°. This brings the drive shaft close to the virtual half line, making it possible to encourage further mass centralization.

The engine is further configured so that the angle θ1 and the angle θ3 fulfill a relationship of θ1 < θ3. This configuration brings the drive shaft closer to the crankshaft than in a configuration where the crankshaft, the main shaft, and the drive shaft are arranged in a line, making it possible to encourage further mass centralization.

The engine is further configured so that the angle θ2 and the angle θ3 fulfill a relationship of θ2 > θ3. This brings the drive shaft close to the virtual half line, making it possible to encourage further mass centralization.

The engine may be configured so that, as viewed from the axis direction of the crankshaft, the axis of the cylinder is located closer to the balance shaft than the virtual half line. By locating the cylinder closer to the balance shaft in this way, the interference between the main shaft and the cylinder is reduced, and the main shaft can reliably be brought close to the virtual half line starting from the crank axis. As a result, it becomes possible to encourage mass centralization more effectively.

The engine may further comprises a clutch mechanism provided coaxially with the main shaft, and executing selectively a transmission of power from the crankshaft to the main shaft and interruption of the transmission of the power from the crankshaft to the main shaft. More specifically, with the engine according to the present invention mounted on a motorcycle, for example, the main shaft becomes located at a relatively upper position. This also locates the clutch mechanism coaxial with the main shaft at a relatively upper position. This reduces the interference of a clutch box covering the clutch mechanism with the legs of a driver of the motorcycle, making it possible to enhance driver's operability.

The invention may be particularly suitably applicable to the engine configured so that the main shaft is provided with a plurality of gears forming a part of the transmission. More specifically, in the engine having this configuration, the main shaft includes a plurality of gears forming a part of the transmission. Therefore, the main shaft is generally heavier than the balance shaft. Thus, mass centralization is influenced largely by the main shaft. In this regard, mass centralization can be encouraged particularly preferably by arranging the main shaft close to the virtual half line starting from the crank axis so as to fulfill the foregoing angular relationship.

The vehicle according to the invention comprises the engine; and a wheel to be driven by the engine. Thus, mass centralization can be encouraged in the engine provided with the main shaft, the crankshaft, and the balance shaft.

### [ADVANTAGEOUS EFFECTS OF INVENTION]

The present invention allows encouragement of mass centralization in an engine with a main shaft, a crankshaft, and a balance shaft.

### [BRIEF DESCRIPTION OF DRAWINGS]

Fig. 1 is a side view showing a motorcycle corresponding to an example of a straddled vehicle equipped with an engine according to the present invention.
Fig. 2 is a partial cross-sectional view showing the internal configuration of an engine taken at a substantially central cross section.
Fig. 3 is a partial cross-sectional view showing the internal configuration of the engine taken at a cross section external to the cross-section of Fig. 2.
Fig. 4 is a partial cross-sectional view of the engine taken along a cutting line IV-IV shown in Fig. 3.

### [DESCRIPTION OF EMBODIMENTS]

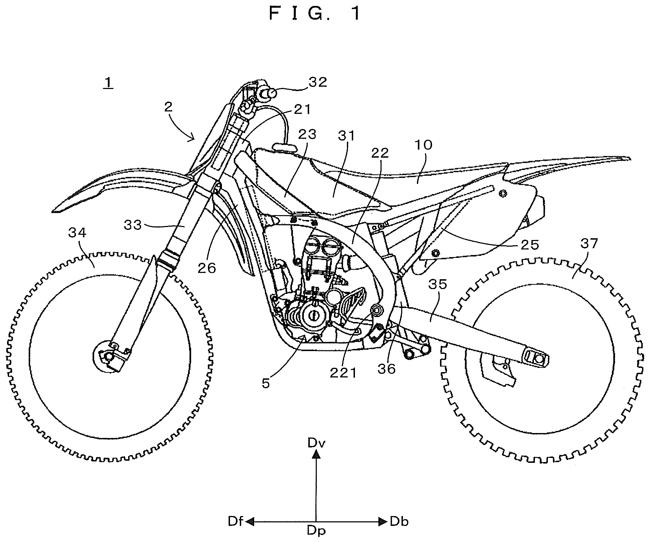

Fig. 1 is a side view showing a motorcycle corresponding to an example of a straddled vehicle equipped with an engine according to the present invention. A motorcycle 1 shown in Fig. 1 is so-called an off-road type vehicle. Meanwhile, in addition to this type, the straddled vehicle includes motorcycles of an on-road type, a scooter-type, a so-called moped-type, etc. The vehicle according to the present invention includes not only the straddled vehicle but also includes an all terrain vehicle (ATV), a four-wheel buggy, etc.

In this description, front, rear, left, and right means a front side, a rear side, a left side, and a right side respectively viewed from a passenger on a seat 10. A front-rear direction Dp, a front side Df in the front-rear direction Dp, a rear side Db in the front-rear direction Dp, a vehicle-width direction Dw, and a vertical direction Dv are shown, where appropriate. Each of the front-rear direction Dp and the vehicle-width direction Dw is a horizontal direction. The front-rear direction Dp, the vehicle-width direction Dw, and the vertical direction Dv are orthogonal to each other.

The motorcycle 1 includes a vehicle body frame 2. The vehicle body frame 2 has a head pipe 21, a main frame 22, a tank rail 23, a seat rail 24, a back stay 25, a down frame 26, etc. The head pipe 21 is arranged at an end portion of the vehicle body frame 2 on the front side Df. The main frame 22 extends from the head pipe 21 toward the rear side Db and is bent downward. The tank rail 23 is arranged between the head pipe 21 and the tank rail 23. A fuel tank 31 is attached to the tank rail 23. The seat rail 24 extends from the main frame 22 toward the rear side Db. The seat 10 is attached to the seat rail 24. An end portion of the seat rail 24 on the rear side Db is connected to the main frame 22 with the back stay 25. The down frame 26 extends downward from the head pipe 21 and is bent toward the rear side Db. Respective end portions of the down frame 26 and the main frame 22 on the rear side Db are connected to each other.

A steering shaft not shown in the drawings is rotatably inserted into the head pipe 21. The steering shaft has an upper end portion to which a handle 32 is attached. A front fork 33 extending diagonally downward toward the front side Df is attached to the steering shaft. The front fork 33 has a lower end portion to which a front wheel 34 is attached rotatably.

A pivot shaft 221 is attached to an end portion of the main frame 22 on the rear side Db. A rear arm 35 extends from the pivot shaft 221 toward the rear side Db. While the rear arm 35 is supported by the pivot shaft 221 so as to be pivotable upward and downward (vertical direction Dv) about the pivot shaft 221, the rear arm 35 is attached to the main frame 22 via a gear suspension 36. A rear wheel 37 is rotatably attached to an end portion of the rear arm 35 on the rear side Db.

An engine 5 is mounted to the vehicle body frame 2 in a region surrounded by the main frame 22 and the down frame 26. The engine 5 rotates the rear wheel 37 via a secondary speed reducer not shown in the drawings. The secondary speed reducer can use any one of a chain-driven system, a shaft-driven system, and a belt-driven system.

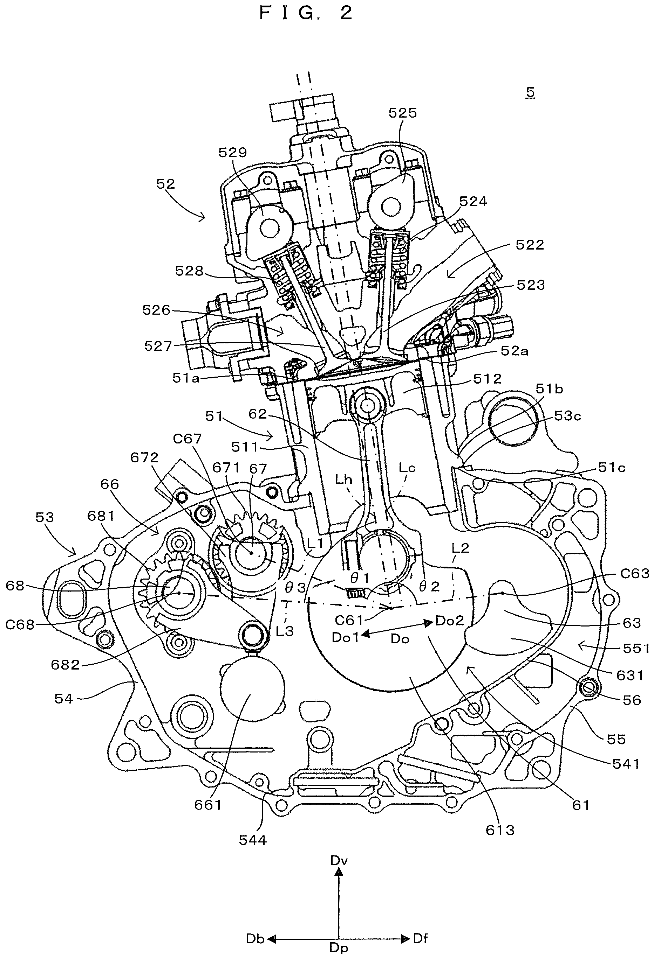

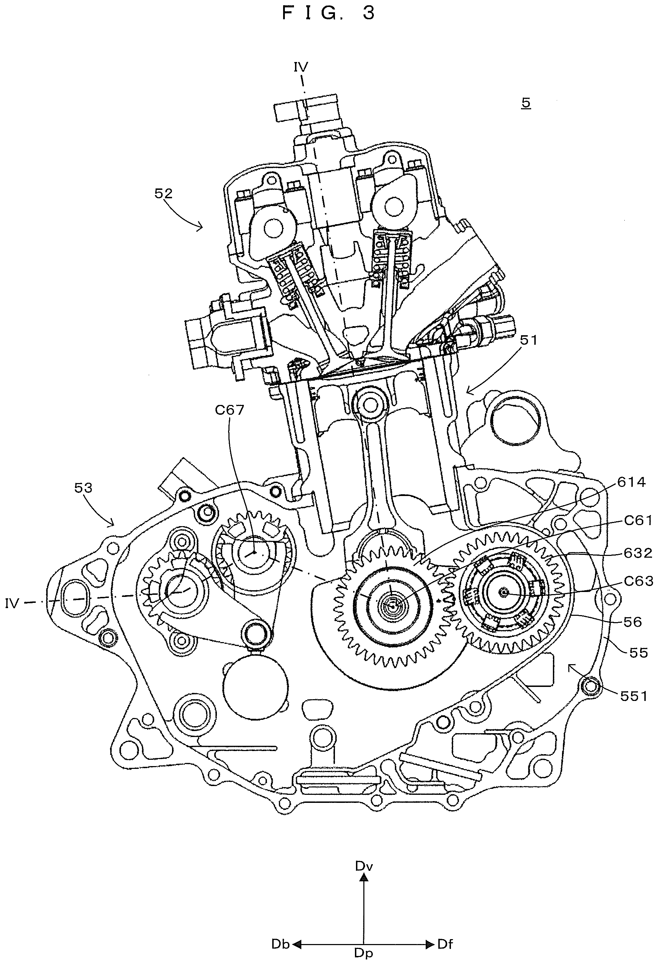

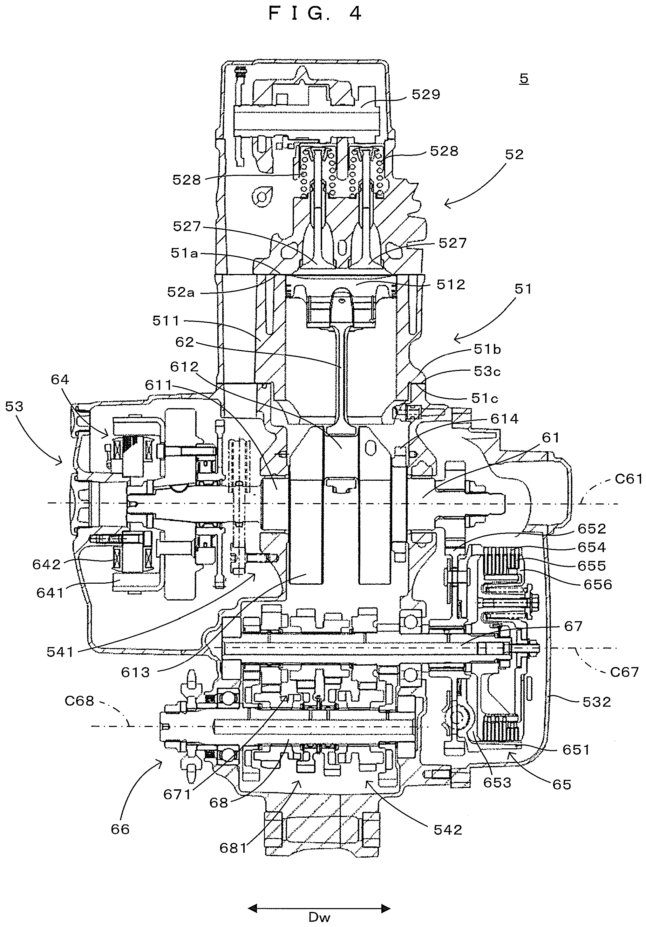

Fig. 2 is a partial cross-sectional view showing the internal configuration of an engine taken at a substantially central cross section. Fig. 3 is a partial cross-sectional view showing the internal configuration of the engine taken at a cross section external to the cross-section of Fig. 2. Fig. 4 is a partial cross-sectional view of the engine taken along a cutting line IV-IV shown in Fig. 3. The engine 5 includes a cylinder block 51, a cylinder head 52 attached to the upper end of the cylinder block 51, and a crankcase 53 attached to the lower end of the cylinder block 51. The cylinder block 51 has a head mating surface 51a as a surface of mating to the cylinder head 52. The cylinder head 52 has a cylinder mating surface 52a as a surface of mating to the cylinder block 51. With the head mating surface 51a of the cylinder block 51 and the cylinder mating surface 52a of the cylinder head 52 in mating contact with each other, the cylinder block 51 and the cylinder head 52 are attached to each other. The cylinder block 51 has an outer peripheral surface provided with a flange 51b. The flange 51b has a crank mating surface 51c as a surface of mating to the crankcase 53. The crankcase 53 has a cylinder mating surface 53c as a surface of mating to the cylinder block 51. With the crank mating surface 51c of the cylinder block 51 and the cylinder mating surface 53c of the crankcase 53 in mating contact with each other, the cylinder block 51 and the crankcase 53 are attached to each other.

The engine 5 is a single-cylinder type engine with a single cylinder 511 provided at the cylinder block 51. A piston 512 is arranged in the cylinder 511. The piston 512 can make reciprocating motion in the cylinder 511. The cylinder 511 is inclined rearward. More specifically, an axis Lc of the cylinder 511 is inclined toward the rear side Db with respect to the vertical direction Dv. In other words, the axis Lc of the cylinder 511 is inclined further toward the rear side Db at a higher position. The axis Lc of the cylinder 511 can be determined as a virtual line passing through the center of a bore in the cylinder 511 and extending parallel to the direction of the stroke of the piston 512, for example.

The cylinder head 52 includes an intake port 522 communicating with a combustion chamber defined between the cylinder head 52 and the upper end surface of the piston 512, and an intake valve 523 for opening and closing the intake port 522 for the combustion chamber. The intake valve 523 is biased by a valve spring 524 to be located at a position of closing the intake port 522. Rotating a camshaft 525 contacting with the upper end of the intake valve 523 allows opening and closing of the intake valve 523. The cylinder head 52 includes an exhaust port 526 communicating with the combustion chamber, and an exhaust valve 527 for opening and closing the exhaust port 526 for the combustion chamber. The exhaust valve 527 is biased by a valve spring 528 to be located at a position of closing the exhaust port 526. Rotating a camshaft 529 contacting with the upper end of the exhaust valve 527 allows opening and closing of the exhaust valve 527. In this way, the engine 5 has an intake and exhaust valve mechanism of a double over head camshaft (DOHC) type with the camshafts 525 and 529 provided on an intake side and an exhaust side respectively. The engine 5 has a multivalve mechanism with multiple (two) intake valves 523 and multiple (two) exhaust valves 527.

The crankcase 53 includes a housing part 54 housing the mechanical structures of the engine 5, and a reservoir part 55 (oil tank) storing engine oil circulating in the engine 5. The housing part 54 and the reservoir part 55 are separated by a partition 56. Further, the housing part 54 includes a crank chamber 541 inside.

The crank chamber 541 communicates with the cylinder 511 and houses a crankshaft 61 arranged parallel to the vehicle-width direction Dw. The crankshaft 61 includes a crank journal 611 supported by the crankcase 53 so as to be rotatable about a crank axis C61 parallel to the vehicle-width direction Dw, and a crank pin 612 eccentric with respect to the crank axis C61. The crank pin 612 is connected to the piston 512 with a connecting rod 62. The crankshaft 61 rotates about a crank axis C61 in conjunction with the reciprocating motion of the piston 512. The crankshaft 61 includes a counterweight 613 eccentric with respect to the crank axis C61 toward the opposite side of the crank pin 612. The counterweight 613 contributes to reduction of vibration.

The crank chamber 541 houses a balance shaft 63 arranged parallel to the vehicle-width direction Dw. The balance shaft 63 is supported by the crankcase 53 so as to be rotatable about a balancer axis C63 parallel to the vehicle-width direction Dw, and includes a weight 631 eccentric with respect to the balancer axis C63. The balance shaft 63 rotates in conjunction with the rotation of the crankshaft 61 to reduce vibration of the crankshaft 61.

A primary drive gear 614 is attached to the crankshaft 61 to be coaxial with the crankshaft 61. The primary drive gear 614 rotates together with the crankshaft 61 about the crank axis C61. Further, a balancer gear 632 is attached to the balance shaft 63 to be coaxial with the balance shaft 63. The balance shaft 63 rotates together with the balancer gear 632 about the balancer axis C63. The primary drive gear 614 and the balancer gear 632 are engaged with each other, the reduced rotation of the crankshaft 61 is transmitted to the balance shaft 63.

The engine 5 includes a generator 64 that generates power from the rotary motion of the crankshaft 61. The generator 64 includes a flywheel 641 and a stator coil 642 arranged inside the flywheel 641. The flywheel 641 is attached to the crankshaft 61 to be coaxial with the crankshaft 61, and rotatable about the crank axis C61 together with the crankshaft 61. The flywheel 641 includes N-pole magnets and S-pole magnets aligned alternately to surround the stator coil 642 from outside. The generator 64 generates power in response to electromagnetic induction generated between the magnets and the stator coil 642 by the rotation of the flywheel 641.

The crank chamber 541 further houses a clutch mechanism 65 and a transmission 66. As shown in Fig. 4, an end portion of the crankcase 53 in the vehicle-width direction Dw forms a clutch box 532 covering the clutch mechanism 65 and projects further than the cylinder 511 in the vehicle-width direction Dw. The clutch mechanism 65 includes a clutch housing 651 rotatable about a main axis C67 parallel to the vehicle-width direction Dw. The clutch housing 65 has an outer periphery provided with a primary driven gear 652 centered on a main axis C65. The primary drive gear 614 and the primary driven gear 652 are engaged with each other to form a primary speed reducer of reducing the rotation of the crankshaft 61 and transmitting it to the clutch housing 651.

In the clutch mechanism 65, a clutch boss 653 rotatable about the main axis C67 is arranged inside the clutch housing 651. Further, friction plates 654 to rotate together with the clutch housing 651 and clutch plates 655 to rotate together with the clutch boss 653 are aligned alternately. The clutch mechanism 65 further includes a pressure part 656 biased toward the clutch boss 653 by the elastic force of a clutch spring. The clutch mechanism 65 presses the friction plates 654 and the clutch plates 655 to the clutch boss 653 by the pressure part 656 to allow transmission of the rotation of the clutch housing 651 to the clutch boss 653. In another case, the clutch mechanism 65 moves pressure part 656 toward the opposite side of the clutch boss 653 against the elastic force of the clutch spring to allow interruption of transmission of the rotation from the clutch housing 651 to the clutch boss 653.

A main shaft 67 of the transmission 66 is attached to the clutch boss 653. Thus, the clutch mechanism 65 can make transmitting motion of transmitting power from the crankshaft 61 to the main shaft 67 and interrupting motion of interrupting transmission of the power from the crankshaft 61 to the main shaft 67 selectively.

The transmission 66 includes the main shaft 67 and a drive shaft 68 both arranged parallel to the vehicle-width direction Dw. The main shaft 67 is supported by the crankcase 53 so as to be rotatable about the main axis C67. The drive shaft 68 is supported by the crankcase 53 so as to be rotatable about a drive axis C68 parallel to the vehicle-width direction Dw. The main shaft 67 is provided with a plurality of gears 671 forming a part of the transmission 66. Thus, the weight of the main shaft 67 including the plurality of gears 671 is generally larger than that of the foregoing balance shaft 63. The main shaft 67 is further provided with a shift fork 672 for causing the gears 671 to slide toward the axis direction of the main shaft 67 (vehicle-width direction Dw). The drive shaft 68 is provided with a plurality of gears 681, and a shift fork 682 for causing the gears 681 to slide toward the axis direction of the drive shaft 68 (vehicle-width direction Dw). A shift drum 661 to rotate in response to driver's operation is provided for the shift forks 672 and 682. The shift forks 672 and 682 move the gear 671 and the gear 681 respectively located at their positions corresponding to the rotation angle of the shift drum 661. In this way, the transmission 66 transmits the rotation of the main shaft 67 to the drive shaft 68 at a transmission gear ratio responsive to the driver's operation. The rotation of the drive shaft 68 is transmitted to the rear wheel 37 by the secondary speed reducer.

As described above, the engine oil is cyclically supplied to the crank chamber 54. The bottom of the crank chamber 541 functions as an oil pan 544 to receive the engine oil dripping by its own weight.

The reservoir part 55 stores the engine oil in a reservoir chamber 551 inside the reservoir part 55. The reservoir chamber 551 is arranged on the front side Df of the crank chamber 541 and overlaps the crank chamber 541 at least partially in a front view from the front side Df. The engine oil has a composition containing mineral-based oil, chemically synthesized oil, or partially chemically synthesized oil as base oil, and an adder added to the base oil. The engine oil is circulated in the engine 5 by a pump (scavenge pump or feed pump). This pump is driven by using the rotation of the crankshaft 61. More specifically, a pump gear (not shown in the drawings) engaging with the primary drive gear 614 is attached to the pump to be coaxial with the pump. The primary drive gear 614 and the pump gear transmit the rotation of the crankshaft 61 to the pump.

The following describes layout in the engine 5 in detail taken in a side view from the axis direction of the crankshaft 61 (namely, from the vehicle-width direction Dw) shown in Fig. 2. The crankshaft 61, the balance shaft 63, the main shaft 67, and the drive shaft 68 are arranged parallel to each other. As shown in Fig. 2, the crankshaft 61 is offset rearward from the axis Lc of the cylinder 511. More specifically, a virtual half line Lh starting from the crank axis C61 of the crankshaft 61 and extending parallel to the axis Lc of the cylinder 511 toward the cylinder 511 is located rearward of the axis Lc of the cylinder 511. From a different viewpoint, in an offset direction Do normal to each of the axis Lc of the cylinder 511 and the crank axis C61, the axis Lc of the cylinder 511 is located closer to the balance shaft 63 than the virtual half line Lh. In this way, the crank axis C61 (or virtual half line Lh) is located on one side Do1 of the offset direction Do in respect with the axis Lc of the cylinder 511 , and the balance shaft 63 is located on the other side Do2 of the offset direction Do in respect with the axis Lc of the cylinder 511. The other side Do2 is opposite to the one side Do1.

The balance shaft 63 is arranged on the opposite side of the main shaft 67 across the virtual half line Lh. "The balance shaft 63 being arranged on the opposite side of the main shaft 67 across the virtual half line Lh" has the same meaning as the balance shaft 63 being arranged on the opposite side of the main shaft 67 across a virtual line passing through the crank axis C61 and extending parallel to the axis Lc of the cylinder 511. An angle θ1 (0° < θ1 < 90°) is provided between the virtual half line Lh and a first virtual line segment L1 between the main axis C67 and the crank axis C61. Further, an angle θ2 (0° < θ2) is provided between the virtual half line Lh and a second virtual line segment L2 between the balancer axis C63 and the crank axis C61. The crankshaft 61, the balance shaft 63, and the main shaft 67 are arranged so as to fulfill a relationship of angle θ1 < angle θ2. An angle θ3 (0° < θ3 < 90°) is provided between the virtual half line Lh and a third virtual line segment L3 between the crank axis C61 and the drive axis C68. In this case, the crankshaft 61, the main shaft 67, the drive shaft 68, and the balance shaft 63 are arranged so as to fulfill a relationship of angle θ1 < angle θ3 and a relationship of angle θ2 > angle θ3.

A line segment and a half line form a major angle (an angle greater than 180 degrees) and a minor angle (an angle less than 180 degrees), and an angle therebetween described herein means the minor angle. Specifically, all the angle θ1, the angle θ2, and the angle θ3 are smaller than 180 degrees. The axis Lc, the virtual half line Lh, the first virtual line segment L1, the second virtual line segment L2, and the third virtual line segment L3 mentioned herein are all normal to the axis direction of the crankshaft 61 (vehicle-width direction Dw).

In the engine 5 having the foregoing configuration, the respective masses of the main shaft 67 and the balance shaft 63 are distributed to the opposite sides of the virtual half line Lh starting from the crank axis C61 and extending parallel to the axis Lc of the cylinder 511 toward the cylinder 511. Hence, the arrangement of the main shaft 67 influences mass centralization. In this regard, in this embodiment, the main shaft 67 is arranged so as to fulfill the relationship of angle θ1 < angle θ2. More specifically, to encourage mass centralization, the main shaft 67 is arranged close to the virtual half line Lh starting from the crank axis C61 so as to fulfill this angular relationship. By doing so, mass centralization can be encouraged in the engine 5 provided with the main shaft 67, the crankshaft 61, and the balance shaft 63.

The main shaft 67 I arranged so as to make the angle θ1 less than 90 degrees. This brings the main shaft 67 close to the virtual half line Lh, making it possible to encourage further mass centralization.

The drive shaft 68 is arranged so that, as viewed from the axis direction of the crankshaft 61, the angle θ3 between the virtual half line Lh and a third virtual line segment L3 between the crank axis C61 and the drive axis C68 becomes less than 90 degrees. This brings the drive shaft 68 close to the virtual half line Lh, making it possible to encourage further mass centralization.

The crankshaft 61, the main shaft 67, and the drive shaft 68 are arranged so that the angle θ1 and the angle θ3 fulfill the relationship of θ1 < θ3. This configuration brings the drive shaft 68 closer to the crankshaft 61 than in a configuration where the crankshaft 61, the main shaft 67, and the drive shaft 68 are arranged in a line, making it possible to encourage further mass centralization.

The drive shaft 68 is arranged so that the angle θ2 and the angle θ3 fulfill the relationship of θ2 > θ3. This brings the drive shaft 68 close to the virtual half line Lh, making it possible to encourage further mass centralization.

As viewed from the axis direction of the crankshaft 61, the axis Lc of the cylinder 511 is located closer to the balance shaft 63 than the virtual half line Lh (Fig. 2). By locating the cylinder 511 closer to the balance shaft 63 in this way, the interference between the main shaft 67 and the cylinder 511 is reduced, and the main shaft 67 can reliably be brought close to the virtual half line Lh starting from the crank axis C61. As a result, it becomes possible to encourage mass centralization more effectively.

The present invention is applied preferably, particularly to the engine 5 provided with the clutch mechanism 65 coaxial with the main shaft 67. More specifically, with the engine according to the present invention mounted on the motorcycle 1 like in the foregoing case, as a result of the arrangement of the main shaft 67 so as to reduce the angle θ1, the main shaft 67 becomes located at a relatively upper position. This also locates the clutch mechanism 65 coaxial with the main shaft 67 at a relatively upper position. This reduces the interference of the clutch box 532 covering the clutch mechanism 65 with the legs of a driver of the motorcycle 1, making it possible to enhance driver's operability.

As described above, the main shaft 67 includes the plurality of gears 671 forming a part of the transmission 66, so that the main shaft 67 is generally heavier than the foregoing balance shaft 63. The present invention is applied preferably, particularly to the engine 5 having this configuration. More specifically, in the engine 5 having this configuration, mass centralization is influenced largely by the main shaft 67. In this regard, mass centralization can be encouraged particularly preferably by arranging the main shaft 67 close to the virtual half line Lh starting from the crank axis C61 so as to fulfill the foregoing angular relationship.

As described above, in the foregoing embodiment, the engine 5 corresponds to an example of an "engine" of the present invention. The cylinder 511 corresponds to an example of a "cylinder" of the present invention. The crankshaft 61 corresponds to an example of a "crankshaft" of the present invention. The crank axis C61 corresponds to an example of a "crank axis" of the present invention. The piston 512 corresponds to an example of a "piston" of the present invention. The connecting rod 62 corresponds to an example of a "connecting rod" of the present invention. The main shaft 67 corresponds to an example of a "main shaft" of the present invention. The main axis C67 corresponds to an example of a "main axis" of the present invention. The balance shaft 63 corresponds to an example of a "balance shaft" of the present invention. The drive shaft 68 corresponds to an example of a "drive shaft" of the present invention. The drive axis C68 corresponds to an example of a "drive axis" of the present invention. The vehicle-width direction Dw corresponds to an example of the "axis direction of the crankshaft" of the present invention. The axis Lc corresponds to an example of the "axis of the cylinder" of the present invention. The virtual half line Lh corresponds to an example of a "virtual half line" of the present invention. The balancer axis C63 corresponds to an example of a "balancer axis" of the present invention. The first virtual line segment L1 corresponds to an example of a "first virtual line segment" of the present invention. The second virtual line segment L2 corresponds to an example of a "second virtual line segment" of the present invention. The third virtual line segment L3 corresponds to an example of a "third virtual line segment L3" of the present invention. The angle θ1 corresponds to an example of an "angle θ1" of the present invention. The angle θ2 corresponds to an example of an "angle θ2" of the present invention. The angle θ3 corresponds to an example of an "angle θ3" of the present invention. The motorcycle 1 corresponds to an example of a "vehicle" of the present invention. The front wheel 34 and the rear wheel 37 correspond to examples of a "wheel" of the present invention.

The present invention is not limited to the foregoing embodiment. Various changes other than those described above are applicable within a range not deviating from the substance of the invention. For example, in the foregoing description, the engine 5 described as an example is a single-cylinder type engine with the single cylinder 511 provided at the cylinder block 51. Alternatively, the number of the cylinders 511 of the engine 5 is not limited to one but the engine 5 may include two or more cylinders 511.

The intake and exhaust valve mechanism provided at the engine 5 is not limited to a mechanism of the foregoing DOHC type but it may also be a mechanism of a different type such as a single over head camshaft (SOHC). Further, a system for driving the intake valve 523 and the exhaust valve 527 is not limited to the foregoing direct-drive system but it may also be a different system such as a rocker arm system.

The posture of the cylinder 511 is not limited to the foregoing rearward tilted posture but it may also be a forward tilted posture or an upright posture.

The specific configuration of the crankcase 53 can be changed, if appropriate. Thus, the crankcase 53 is not always required to include the reservoir part 55 integrally, for example.

The position or angle for attaching the engine 5 to the vehicle body frame 2 is not limited to that described in the foregoing example but can be changed, if appropriate.

### [INDUSTRIAL APPLICABILITY]

The present invention is applicable to every type of engine provided with a main shaft, a crankshaft, and a balance shaft, and to every type of vehicle comprising the engine.

### [REFERENCE SIGNS LIST]

- 1: motorcycle (vehicle)
- 34: front wheel (wheel)
- 37: rear wheel (wheel)
- 5: engine
- 511: cylinder
- 512: piston
- 61: crankshaft
- 62: connecting rod
- 63: balance shaft
- 67: main shaft
- 68: drive shaft
- C61: crank axis
- C67: main axis
- C63: balancer axis
- C68: drive axis
- Dw: vehicle-width direction (axis direction of the crankshaft)
- Lc: axis (axis of the cylinder)
- Lh: virtual half line
- L1: first virtual line segment
- L2: second virtual line segment
- L3: third virtual line segment
- θ1: angle
- θ2: angle
- θ3: angle

## Claims

1. An engine comprising:
a cylinder (511);
a crankcase (53) connected to the cylinder (511);
a crankshaft (61) arranged in the crankcase (53) at least partially, connected via a connecting rod (62) to a piston (512) to make reciprocating motion in the cylinder (511), and supported by the crankcase (53) so as to be rotatable about a crank axis (C61) in conjunction with the reciprocating motion of the piston (512);
a main shaft (67) arranged in the crankcase (53) at least partially, forming a part of a transmission (66), and supported by the crankcase (53) so as to be rotatable about a main axis (C67) in conjunction with the crankshaft (61); and
a balance shaft (63) arranged in the crankcase (53) at least partially, provided on an opposite side of the main shaft (67) across a virtual half line (Lh) starting from the crank axis (C61) and extending parallel to an axis (Lc) of the cylinder (511) toward the cylinder (511) as viewed from an axis direction of the crankshaft (61), and supported by the crankcase (53) so as to be rotatable about a balancer axis (C63) in conjunction with the crankshaft (61),
a drive shaft (68) forming a part of the transmission (66), and supported by the crankcase (53) so as to be rotatable about a drive axis (C68) in conjunction with the main shaft (67), wherein
as viewed from the axis direction of the crankshaft (61), an angle θ1 and an angle θ2 fulfill a relationship of θ1 < θ2, the angle θ1 being provided between the virtual half line (Lh) and a first virtual line segment (L1) between the crank axis (C61) and the main axis (C67), the angle θ2 is provided between the virtual half line (Lh) and a second virtual line segment (L2) between the crank axis (C61) and the balancer axis (C63), the angle θ1 is less than 90°,
as viewed from the axis direction of the crankshaft (61), an angle θ3 provided between the virtual half line (Lh) and a third virtual line segment (L3) between the crank axis (C61) and the drive axis (C68) is less than 90°,
the angle θ1 and the angle θ3 fulfill a relationship of θ1 < θ3, and
the angle θ2 and the angle θ3 fulfill a relationship of θ2 > θ3.

2. The engine according to claim 1, wherein as viewed from the axis direction of the crankshaft (61), the axis of the cylinder (511) is located closer to the balance shaft (63) than the virtual half line (Lh).

3. The engine according to claim 1 or 2, further comprising a clutch mechanism (65) provided coaxially with the main shaft (67), and executing selectively a transmission of power from the crankshaft (61) to the main shaft (67) and interruption of the transmission of the power from the crankshaft (61) to the main shaft (67).

4. The engine according to any one of claims 1 to 3, wherein the main shaft (67) is provided with a plurality of gears (671) forming a part of the transmission (66).

5. A vehicle comprising:
the engine (5) according to any one of claims 1 to 4; and
a wheel (34) to be driven by the engine (5).

## Patentansprüche

1. Ein Motor, der umfasst:
einen Zylinder (511);
ein Kurbel-Gehäuse (53), das mit dem Zylinder (511) verbunden ist;
eine Kurbel-Welle (61), die zumindest teilweise in dem Kurbel-Gehäuse (53) angeordnet ist, über eine Verbindungs-Stange (62) mit einem Kolben (512) verbunden ist, um eine Hin-und-Her-Bewegung in dem Zylinder (511) auszuführen, und die durch das Kurbel-Gehäuse (53) gelagert ist, so dass sie in Verbindung mit der Hin-und-Her-Bewegung des Kolbens (512) um eine Kurbel-Achse (C61) drehbar ist;
eine Haupt-Welle (67), die zumindest teilweise in dem Kurbel-Gehäuse (53) angeordnet ist, einen Teil eines Getriebes (66) bildet und von dem Kurbel-Gehäuse (53) um eine Haupt-Achse (C67) in Verbindung mit der Kurbel-Welle (61) drehbar gelagert ist; und
eine Ausgleichs-Welle (63), die zumindest teilweise in dem Kurbel-Gehäuse (53) angeordnete ist, die auf einer gegenüberliegenden Seite der Haupt-Welle (67) quer zu einer virtuellen Halb-Linie (Lh), die von der Kurbel-Achse (C61) ausgeht und sich parallel zu einer Achse (Lc) des Zylinders (511) zu dem Zylinder (511) erstreckt, wenn von einer Achs-Richtung der Kurbel-Welle (61) aus gesehen, und von dem Kurbel-Gehäuse (53) gelagert ist, so dass sie um eine Ausgleichs-Achse (C63) in Verbindung mit der Kurbel-Welle (61) drehbar gelagert ist,
eine Antriebs-Welle (68), die einen Teil des Getriebes (66) bildet und von dem Kurbel-Gehäuse (53) gelagert ist, so dass sie in Verbindung mit der Haupt-Welle (67) um eine Antriebs-Achse (C68) drehbar ist, wobei
aus der Achs-Richtung der Kurbel-Welle (61) gesehen, ein Winkel θ1 und ein Winkel θ2 eine Beziehung von θ1 < θ2 erfüllen, der Winkel θ1 zwischen der virtuellen Halb-Linie (Lh) und einem ersten virtuellen Linien-Segment (L1) zwischen der Kurbel-Achse (C61) und der Haupt-Achse (C67) vorgesehen ist, der Winkel θ2 zwischen der virtuellen Halb-Linie (Lh) und einem zweiten virtuellen Linien-Segment (L2) zwischen der Kurbel-Achse (C61) und der Ausgleichs-Achse (C63) vorgesehen ist, der Winkel θ1 kleiner als 90° ist,
aus der Achs-Richtung der Kurbel-Welle (61) gesehen, ein Winkel θ3 zwischen der virtuellen Halb-Linie (Lh) und einem dritten virtuellen Linien-Segment (L3) zwischen der Kurbel-Achse (C61) und der Antriebs-Achse (C68) kleiner als 90° ist,
der Winkel θ1 und der Winkel θ3 eine Beziehung von θ1 < θ3 erfüllen, und
der Winkel θ2 und der Winkel θ3 eine Beziehung von θ2 > θ3 erfüllen.

2. Der Motor gemäß Anspruch 1, wobei, von der Achs-Richtung der Kurbel-Welle (61) aus gesehen, die Achse des Zylinders (511) näher an der Ausgleichs-Welle (63) liegt als die virtuelle Halb-Linie (Lh).

3. Der Motor gemäß Anspruch 1 oder 2, ferner mit einem Kupplungs-Mechanismus (65), der koaxial zur Haupt-Welle (67) vorgesehen ist und wahlweise eine Kraftübertragung von der Kurbel-Welle (61) auf die Haupt-Welle (67) und eine Unterbrechung der Kraftübertragung von der Kurbel-Welle (61) auf die Haupt-Welle (67) ausführt.

4. Der Motor gemäß einem der Ansprüche 1 bis 3, wobei die Haupt-Welle (67) mit einer Mehrzahl von Zahnrädern (671) versehen ist, die einen Teil des Getriebes (66) bilden.

5. Ein Fahrzeug, das umfasst:
den Motor (5) gemäß einem der Ansprüche 1 bis 4; und
ein Rad (34), das durch den Motor (5) angetrieben ist.

## Revendications

1. Moteur comprenant :
un cylindre (511),
un carter de vilebrequin (53) relié au cylindre (511),
un vilebrequin (61) disposé au moins partiellement dans le carter de vilebrequin (53), relié par l'intermédiaire d'une bielle de raccordement (62) à un piston (512) pour réaliser un mouvement de va-et-vient dans le cylindre (511) et supporté par le carter de vilebrequin (53) de sorte à ce pouvoir tourner autour d'un axe de vilebrequin (C61) conjointement avec le mouvement de va-et-vient du piston (512),
un arbre principal (67) disposé au moins partiellement dans le carter de vilebrequin (53), formant une partie d'une transmission (66) et supporté par le carter de vilebrequin (53) de sorte à pouvoir tourner autour d'un axe principal (C67) conjointement avec le vilebrequin (61), et
un arbre d'équilibrage (63) disposé au moins partiellement dans le carter de vilebrequin (53), prévu sur le côté opposé de l'arbre principal (67) sur une demi ligne virtuelle (Lh) débutant depuis l'axe de vilebrequin (C61) et s'étendant parallèlement à un axe (Lc) du cylindre (511) en direction du cylindre (511) comme on peut le voir depuis la direction de l'axe du vilebrequin (61), et supporté par le carter de vilebrequin (53) de sorte à pouvoir tourner autour d'un axe d'équilibrage (C63) conjointement avec le vilebrequin (61),
un arbre d'entraînement (68) formant une partie de la transmission (66) et supporté par le carter de vilebrequin (53) de sorte à pouvoir tourner autour d'un axe entraînement (C68) conjointement avec l'arbre principal (67), où
comme on peut le voir depuis la direction de l'axe du vilebrequin (61), un angle θ1 et un angle θ2 satisfont à la relation θ1 < θ2, l'angle θ1 étant disposé entre la demi ligne virtuelle (Lh) et un premier segment de ligne virtuel (L1) entre l'axe de vilebrequin (C61) et l'axe principal (C67), l'angle θ2 étant disposé entre la demi ligne virtuelle (Lh) et un deuxième segment de ligne virtuel (L2) entre l'axe de vilebrequin (C61) et l'axe d'équilibrage (C63), l'angle θ1 étant inférieur à 90 °,
comme on peut le voir depuis la direction de l'axe du vilebrequin (61), un angle θ3 disposé entre la demi ligne virtuelle (Lh) et un troisième segment de ligne virtuel (L3) entre l'axe de vilebrequin (C61) et l'axe d'entraînement (C68) est inférieur à 90 °,
l'angle θ1 et l'angle θ3 satisfont à la relation θ1 < θ3, et
l'angle θ2 et l'angle θ3 satisfont à la relation θ2 > θ3.

2. Moteur selon la revendication 1, dans lequel, comme on peut le voir depuis la direction de l'axe du vilebrequin (61), l'axe du cylindre (511) est plus proche de l'axe d'équilibrage (C63) que de la demi ligne virtuelle (Lh).

3. Moteur selon la revendication 1 ou la revendication 2, comprenant en outre un mécanisme d'embrayage (65) disposé de façon coaxiale à l'arbre principal (67) et exécutant sélectivement une transmission de puissance du vilebrequin (61) jusqu'à l'arbre principal (67) et une interruption de la transmission de puissance du vilebrequin (61) jusqu'à l'arbre principal (67).

4. Moteur selon l'une quelconque des revendications 1 à 3, dans lequel l'arbre principal (67) est doté d'une pluralité d'engrenages (671) formant une partie de la transmission (66).

5. Véhicule comprenant :
le moteur (5) conforme à l'une quelconque des revendications 1 à 4, et
une roue (34) devant être entraînée par le moteur (5).
